# EUROPÄISCHE PATENTSCHRIFT

(11) **EP 3 560 980 B1**
(45) Veröffentlichungstag und Bekanntmachung des Hinweises auf die Patenterteilung: **08.09.2021**
(21) Anmeldenummer: 19171008.6
(22) Anmeldetag: 25.04.2019
(51) Int. Cl.: C08G 63/181, C08G 63/672, C08G 59/62, C08G 59/02, C08G 59/40, C08G 63/16, C08G 63/91

(54) **KETTENVERLÄNGERTE POLYESTER, PRÄPOLYMERISIERTE DERIVATE DAVON UND DEREN VERWENDUNG SOWIE EPOXIDHARZMASSEN**
EXTENDED CHAIN POLYESTER, PREPOLYMERISED DERIVATIVES THEREOF, AND THEIR USE, AS WELL AS EPOXY RESIN COMPOSITIONS
POLYESTER À CHAÎNE ALLONGÉE, DÉRIVÉS PRÉPOLYMÉRISÉS DUDIT POLYESTER ET LEUR UTILISATION AINSI QUE MASSES DE RÉSINE ÉPOXYDE

(30) Priorität: 27.04.2018 DE 102018110180
(43) Veröffentlichungstag der Anmeldung: 30.10.2019
(73) Patentinhaber: Schill + Seilacher "Struktol" GmbH, 22113 Hamburg (DE)
(72) Erfinder: Schneider, Jan Pierre, 22113 Hamburg (DE); Imeri, Seljam, 22113 Hamburg (DE); Just, Berthold, 22113 Hamburg (DE); Döring, Manfred, 64289 Darmstadt (DE)
(74) Vertreter: Prinz & Partner mbB

(56) Entgegenhaltungen:
- WO-A1-2015/042823
- JP-A- H06 145 313
- JP-A- 2002 128 894
- JP-B2- 3 084 353
- US-A- 4 093 675

## Beschreibung

### GEBIET DER ERFINDUNG

Die Erfindung betrifft kettenverlängerte Polyester, insbesondere kettenverlängerte Polyester-Blockcopolymere, sowie präpolymerisierte Derivate der Polyester oder Polyester-Blockcopolymere zur Verwendung als Zähigkeitsmodifikatoren für Epoxidharze. Ferner betrifft die Erfindung Epoxidharzmassen, welche die kettenverlängerten Polyester und/oder kettenverlängerten Polyester-Blockcopolymere enthalten.

### HINTERGRUND DER ERFINDUNG

Epoxidharze dienen in einer Vielzahl an Anwendungen als plastisches Material. Die Hauptanwendungsgebiete sind vor allem Beschichtungen, Klebstoffe und Verbundwerkstoffe, bei denen die Epoxidharze als Matrix eingesetzt werden können. Epoxidharze weisen zahlreiche positive Eigenschaften auf, wie beispielsweise eine hohe Chemikalien- und Hydrolysebeständigkeit, einen geringen Volumenschrumpf während des Aushärtens und eine gute Adhäsion an vielen Substraten. Ein Nachteil von Epoxidharzen gegenüber anderen technischen Polymeren besteht darin, dass die Epoxidharze aufgrund ihres hohen Vernetzungsgrades sehr spröde und rissempfindlich sind.

Die Zähigkeit (Toughness) von Epoxidharzen kann durch Einarbeiten eines Zähigkeitsmodifikators oder Tougheners in die vernetzte Epoxidmatrix verbessert werden. Diese zweite, in der Epoxidharzmatrix dispergierte Toughener-Phase kann einen Kautschuk oder andere Elastomere und Thermoplasten umfassen. Ferner können anorganische Füllstoffe wie Silikate oder Glaskugeln vorhanden sein. Die wichtigste Klasse an Zähigkeitsmodifikatoren, die weitverbreitet in duromeren strukturellen Materialien angewendet werden, sind die so genannten "flüssigen Reaktivkautschuke". Für eine effektive Zähigkeitsverbesserung sind diese mit einer funktionellen Gruppe ausgestattet, die eine Anbindung an die Epoxidharzmatrix ermöglicht. Diese befindet sich in der Regel endständig.

Blockcopolymere zählen zu einer besonderen Gruppe der flüssigen Reaktivkautschuke. Es werden Polymerblöcke mit meist unterschiedlicher Kompatibilität miteinander verbunden. Anders als bei den statistischen Copolymeren ist der amphiphile Charakter der Blockcopolymere stärker ausgeprägt. Als hydrophobe Polymerblöcke spielen vor allem Polybutadiene oder Styrol eine große Rolle, wohingegen die hydrophilen Polymerblöcke oft aus der Gruppe der Polyester, Polyalkylenglykole oder Acrylate ausgewählt werden.

Aus der US 3,723,568 sind segmentierte thermoplastische Copolyester zur Modifikation von Epoxidharzen bekannt, die auf Polyestercopolymeren mit unterschiedlicher Kettenlänge aufbauen. Zwischen den Polyesterketten sind keine weiteren funktionellen Gruppen vorhanden.

Die US 5,140,069 offenbart eine härtbare Zusammensetzung aus einem Epoxidharz, einem Carbonsäureanhydrid als Härter und einer flüssigen Abmischung aus einem Polyalkylenglykol, das Hydroxy-, Carboxy-, Carbonsäureanhydrid- oder Glycidyl-Endgruppen aufweist, und einem elastomeren Copolymer, das aus einem Polybutadien und einem ethylenisch ungesättigten Comonomeren gebildet ist. Die Komponenten der Abmischung können zusammen in einem segmentierten Blockcopolymer vorliegen.

Die JP H06 145313 A zeigt einen biologisch abbaubaren aliphatischen Polyester mit einem mittleren Molekulargewicht Mₙ im Bereich von 5.000 g/mol bis 100.000 g/mol bezogen auf einen Polystyrolstandard und gemessen mit Gelpermeationschromatographie (GPC). Der Polyester kann durch Reaktion eines difunktionalen Polyesters mit einem mittleren Molekulargewicht Mₙ von 1000 g/mol oder mehr mit einem Dianhydrid erhalten werden.

Aus der US 4 093 675 A sind Polyester-Polyether-Blockcopolymere bekannt, die mittels Anhydriden kettenverlängert und mit Carbonsäurefunktionalitäten versehen wurden. Als Anhydrid kommen Tetracarbonsäure-Dianhydride zum Einsatz. Die Polyester-Polyether-Blockcopolymere werden in Klebstoffzusammensetzungen verwendet.

Die JP 3 084353 B2 offenbart ein Verfahren zur Herstellung von Polyester-Polyether-Copolymeren mit hohen Molekulargewichten durch Reaktion von Polyalkylenglykolen mit einem Molekulargewicht im Bereich 1.000 - 30.000 g/mol mit einem Anhydrid, das mehrere Säuregruppen aufweist, unter Verwendung eines Neutralisationsmittels.

Die JP 2002 128894 A zeigt Copolymere, die durch Umsetzung eines mit endständigen Hydroxyl- oder Carbonsäuregruppen versehenen Polyalkylenglykols mit einem Tetracarbonsäure-Dianhydrid und mit einem Diamin oder einem Diisocyanat erhalten wurden.

Aus der WO 2015/042823 ist eine Epoxidharzzusammensetzung bekannt, die ein härtbares Epoxidharz, einen Härter und das Reaktionsprodukt einer Carbonsäure oder eines Carbonsäureanhydrids mit einem amphiphilen Blockcopolymer umfasst, das Anhydrid-reaktive Gruppen sowie ein mit dem Epoxidharz mischbares Segment und ein mit dem Epoxidharz nicht mischbares Segment aufweist. Das so gebildete Reaktionsprodukt weist endständige Carbonsäuregruppen auf. Als Carbonsäureanhydrid können auch Dianhydride wie Pyromellitsäuredianhydrid verwendet werden. Es sollen jedoch immer Carbonsäureterminierte Blockcopolymere entstehen.

### ZUSAMMENFASSUNG DER ERFINDUNG

Der Erfindung liegt die Aufgabe zugrunde, einen kettenverlängerten Polyester bereitzustellen, der durch einfache Syntheseschritte erhältlich ist und der sich als Zähigkeitsmodifikator für Epoxidharze eignet. Ferner soll der kettenverlängerte Polyester eine weitere Funktionalisierung gestatten, durch die kovalente Bindungen zur Epoxidharzmatrix möglich sind.

Erfindungsgemäß wird ein Polyester gemäß Anspruch 1 bereitgestellt. Weitere Ausführungsformen der Erfindung sind in den Unteransprüchen angegeben, die wahlweise miteinander kombiniert werden können.

Der erfindungsgemäße Polyester ist erhältlich durch Umsetzen eines mindestens difunktionellen Polymers, das endständige Hydroxygruppen aufweist, mit einem Dianhydrid, wobei die Anhydridgruppen im Unterschuss zu den Hydroxygruppen vorliegen. Dadurch wird ein Polyester gebildet, der wenigstens ein erstes Segment mit freien Carbonsäuregruppen aufweist, wobei sich das erste Segment jeweils zwischen zwei weiteren Segmenten befindet, die von dem Polymer mit endständigen Hydroxygruppen abgeleitet sind und wobei das Umsetzen unter Verwendung von zwei oder mehr verschiedenen hydroxyterminierten Polymeren erfolgt.

Der Begriff "Umsetzen" bezeichnet in diesem Fall insbesondere die Addition von zwei oder mehr verschiedenen hydroxyterminierten Polymeren an das Dianhydrid.

Mindestens difunktionelle Polymere mit endständigen Hydroxygruppen werden hier auch als hydroxyterminierte Polymere bezeichnet. Mindestens difunktionell bedeutet mit Bezug auf die hydroxyterminierten Polymere, dass zwei oder mehr alkoholische Hydroxygruppen pro Molekül vorhanden sind. Die hydroxyterminierten Polymere weisen bevorzugt endständige primäre Hydroxygruppen auf. Die Umsetzung des Dianhydrids mit den mindestens difunktionellen hydroxyterminierten Polymeren ergibt kettenverlängerte Polyester, bei denen sich die entstehenden Carbonsäure-Funktionen gezielt nur zwischen den einzelnen Polymerblöcken befinden. Die weiteren Segmente sind im kettenverlängerten Polyester endständig angeordnet.

Die Anhydrid-Gruppen werden erfindungsgemäß immer im Unterschuss zu den Hydroxygruppen eingesetzt. Dadurch findet ein gezielter Molekulargewichtsaufbau statt. Durch Verwendung von zwei oder mehr unterschiedlichen hydroxyterminierten Polymeren können kettenverlängerte Polyester in Form von segmentierten Polyester-Blockcopolymeren erhalten werden. Die Verwendung von hydroxterminierten Polymeren mit unterschiedlicher Kompatibilität hinsichtlich der Epoxidharze führt zu amphiphilen Polyester-Blockcopolymeren, die sich besonders gut als Zähigkeitsmodifikatoren oder Toughener eignen.

Der durch Umsetzen der mindestens difunktionellen hydroxyterminierten Polymere mit einem Dianhydrid gebildete Polyester weist endständige Hydroxygruppen auf, vorzugsweise endständige aliphatische Hydroxygruppen. Eine nachträgliche Umfunktionalisierung dieser endständigen Hydroxygruppen in reaktivere Gruppen ist jedoch ebenfalls möglich. Ferner können die aus dem Dianhydrid entstandenen Carbonsäurefunktionen für eine bessere Phasenvermittlung durch Präpolymerisation mit einem Epoxidharz gezielt in Epoxid-Funktionen umgewandelt werden.

### AUSFÜHRLICHE BESCHREIBUNG DER ERFINDUNG

Die zur Herstellung des erfindungsgemäßen Polyesters verwendeten zwei oder mehr mindestens difunktionellen hydroxyterminierten Polymere weisen bevorzugt ein mittleres Molekulargewicht Mₙ (Zahlenmittel) in einem Bereich von 500 g/mol bis 3.000 g/mol auf. Das Molekulargewicht Mₙ kann mittels GPC (Gel-Permeations-Chromatographie) ermittelt werden.

Bevorzugt weisen die hydroxyterminierten Polymere endständige primäre Hydroxygruppen auf. Primäre Hydroxygruppen sind sowohl gegenüber Epoxidharzen als auch gegenüber den zur Bildung des Polyesters eingesetzten Dianhydriden reaktiver als sekundäre oder tertiäre Hydroxygruppen und sterisch weniger gehindert.

Gemäß einer besonders bevorzugten Ausführungsform weisen die hydroxyterminierten Polymere eine Funktionalität von zwei bis drei auf und sind ausgewählt aus der Gruppe bestehend aus hydroxyterminierten Polyalkylenglykolen, Polyestern, Polybutadienen, Copolymeren von Polybutadien und Acrylnitril sowie Mischungen davon.

Als Dianhydrid zur Herstellung des erfindungsgemäßen Polyesters werden bevorzugt Pyromellitsäuredianhydrid, 3,3',4,4'-Biphenyl-tetracarboxyldianhydrid und 3,3',4,4'-Benzophenontetracarbonsäuredianhydrid sowie Kombinationen davon verwendet.

Die Umsetzung eines mindestens difunktionellen hydroxyterminierten Polymers mit einem Dianhydrid kann nach dem folgenden Reaktionsschema erfolgen:

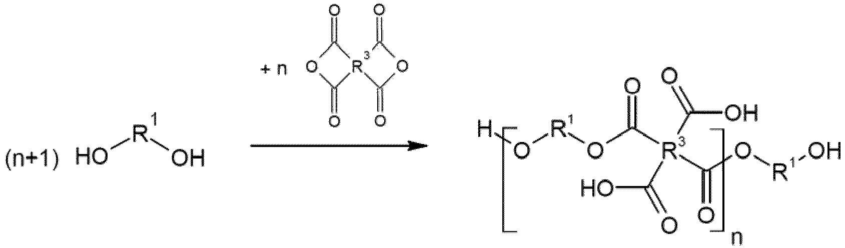

Das molare Verhältnis der Anhydridgruppen zu Hydroxygruppen liegt bevorzugt in einem Bereich von 0,5:1 bis 0,85:1, vorzugsweise 0,5:1 bis 0,7:1. Auf diese Weise kann ein gezielter Molekulargewichtsaufbau erreicht werden.

Gemäß einer bevorzugten Ausführungsform werden zur Herstellung des Polyesters zwei oder mehr verschiedene hydroxyterminierte Polymere mit einer Hydroxyfunktionalität von 2 bis 3 eingesetzt.

Es können segmentierte Blockcopolymere mit Einheiten der allgemeinen Formel (II) erhalten werden: 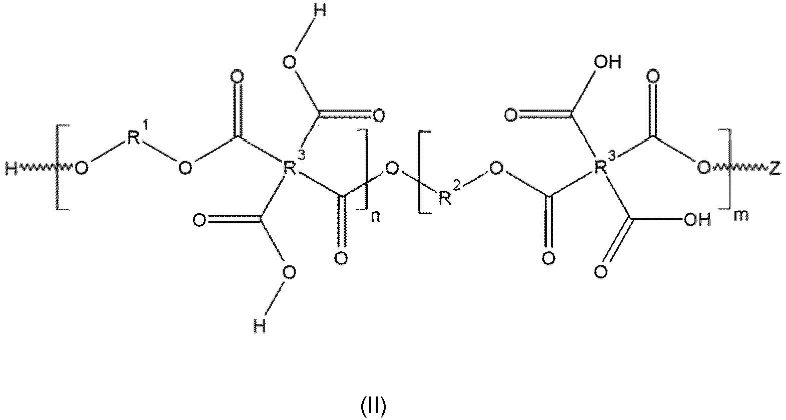 worin
R¹ und R² jeweils unabhängig voneinander einen organischen Rest mit einem mittleren Molekulargewicht Mₙ von 200 bis 5.000 bedeuten, insbesondere einen von einem hydroxyterminierten Polyalkylenglykol, Polyester, Polybutadien oder Copolymer aus Polybutadien und Acrylnitril durch Entfernen der endständigen Hydroxygruppen abgeleiteten Rest, wobei R¹ und R² voneinander verschieden sind;
R³ einen von einem aliphatischen oder aromatischen Dianhydrid durch Entfernen der Anhydridgruppen abgeleiteten Rest bedeutet;
Z einen Rest -R¹OH oder -R²OH bedeutet; und
n und m jeweils eine Zahl von 0 bis 6 bedeuten und n+m in einem Bereich von 1 bis 6 liegt.

Bevorzugt ist R¹ ein organischer Rest, der von einem hydroxyterminierten Polyalkylenglykol oder Polyester durch Entfernen der endständigen Hydroxygruppen abgeleitet ist, und R² ist bevorzugt ein organischer Rest, der von einem hydroxyterminierten Polybutadien oder Copolymer aus Polybutadien und Acrylnitril durch Entfernen der endständigen Hydroxygruppen abgeleitet ist. Auf diese Weise können segmentierte amphiphile Polyester-Blockcopolymere erhalten werden, die mit Epoxidharzen schlecht mischbare und wenig kompatible Polybutadiensegmente in Kombination mit Polyalkylen- oder Polyestersegmenten enthalten, die mit Epoxidharzen kompatibler und leichter mischbar sind.

Das mittlere Molekulargewicht Mₙ des Restes R¹ liegt vorzugsweise in einem Bereich von 500-2.000 g/mol. Der Rest R² weist vorzugsweise ein mittleres Molekulargewicht Mₙ von 1.000-3.000 g/mol auf.

Das zur Bildung des segmentierten amphiphilen Polyester-Blockcopolymers verwendete hydroxyterminierte Polyalkylenglykol oder der hydroxyterminierte Polyester liegt bevorzugt in einem Überschuss über das hydroxyterminierte Polybutadien oder das Polybutadien-Acrylnitril-Copolymer vor. Besonders bevorzugt ist ein Massenverhältnis von hydroxyterminiertem Polyalkylenglykol oder Polyester zu hydroxyterminiertem Polybutadien oder Polybutadien-Acrylnitril-Copolymer von 2:1 bis 6:1. Im segmentierten Polyester-Blockcopolymer ist somit der Massenanteil von R¹>R², und das Anteilsverhältnis R¹/R² liegt bevorzugt in einem Bereich von 2:1 bis 6:1.

Ferner können die organischen Reste R¹ und R² jeweils von Polyalkylenglykolen oder Polyestern mit unterschiedlicher chemischer Struktur abgeleitet sein. Beispielsweise können Polybutylenglykolsegmente mit Polypropylensegmenten und/oder Polyethylenglykolsegmenten miteinander kombiniert werden.

Alternativ können die Reste R¹ und R² jeweils durch Segmente von gleicher chemischer Struktur wie Polyalkylenglykol, Polyester, Polybutadien oder Polybutadien-Acrylnitril-Copolymer gebildet sein, deren mittleres Molekulargewicht Mₙ sich mindestens um den Faktor 1,5 unterscheidet, vorzugsweise um mindestens den Faktor 2. Auf diese Weise kann eine breitere Molekulargewichtsverteilung zwischen den Segmenten erreicht werden.

Der durch Umsetzung des Dianhydrids mit dem mindestens difunktionellen hydroxyterminierten Polymer erhaltene kettenverlängerte Polyester oder Blockcopolyester weist bevorzugt ein mittleres Molekulargewicht Mₙ im Bereich von etwa 1.000 bis 10.000 g/mol auf, besonders bevorzugt von 3.000 bis 6.000 g/mol.

Durch die gezielte Auswahl des Molekulargewichts der zwei oder mehr hydroxyterminierten Polymere und/oder die gezielte Kombination von hydroxyterminierten Polymeren mit unterschiedlichen Molekulargewichten, sowie der Funktionalität der zwei oder mehr hydroxyterminierten Polymere und/oder des Verhältnisses von Hydroxy- zu Anhydrid-Gruppen bei der Polymerisation können das Molekulargewicht sowie die Funktionalität des kettenverlängerten Polyesters oder Polyester-Blockcopolymers im Hinblick auf die jeweilige Anwendung maßgeschneidert werden.

Der durch Umsetzen der mindestens difunktionellen hydroxyterminierten Polymere mit einem Dianhydrid gebildete kettenverlängerte Polyester weist wenigstens ein erstes Segment mit freien Carbonsäuregruppen auf, wobei sich das erste Segment jeweils zwischen zwei weiteren Segmenten befindet, die von dem hydroxyterminierten Polymer abgeleitet sind. Die freien Carbonsäuregruppen sind gegenüber Epoxidgruppen reaktiver als die endständigen Hydroxygruppen des Polyesters und können daher auf einfache Weise gezielt an eine Epoxidfunktion addiert werden. Durch Präpolymerisation des Polyesters mit einer Epoxidverbindung, vorzugsweise einem wenigstens difunktionellen Epoxidharz, kann ein präpolymerisierter Polyester erhalten werden, der freie Epoxidgruppen aufweist. Auf diese Weise kann eine kovalente Bindung des erfindungsgemäßen Polyesters an die Epoxidharzmatrix erreicht und damit die Phasenvermittlung wesentlich verbessert werden.

Zur Präpolymerisation werden die Carbonsäure-Funktionen des Polyesters unter Zusatz von geeigneten Katalysatoren wie Triphenylphosphin oder Triethanolamin an den Oxiranring einer Epoxidverbindung addiert. Die Epoxidverbindung wird bevorzugt im Überschuss eingesetzt. Besonders bevorzugt liegt das Massenverhältnis von Epoxidharz zu kettenverlängertem Polyester zur Durchführung der Präpolymerisation in einem Bereich von 1:2 bis 1:4.

Durch die Präpolymerisation entstehen weitere Ester-Brücken, und der kettenverlängerte Polyester kann bei Verwendung einer mindestens difunktionellen Epoxidverbindung zusätzlich mit Epoxid-Funktionen ausgestattet werden. Durch die Auswahl verschiedener Verhältnisse von Epoxid zu Carbonsäure kann zusätzlich ein weiterer Molekulargewichtsaufbau bewirkt werden. Die Reaktion mit Monoepoxiden (Reaktivverdünner) vor oder während der Präpolymerisation kann dagegen die Molekulargewichtszunahme vermindern und somit die Viskosität senken.

Gegenstand der Erfindung sind somit auch präpolymerisierte kettenverlängerte Polyester der oben beschriebenen Art, die durch Umsetzen der freien Carbonsäuregruppen des Polyesters mit wenigstens einer Epoxidverbindung erhältlich sind, wobei die durchschnittliche Funktionalität der Epoxidverbindung größer als 1 beträgt, weiter bevorzugt von 1,5 bis 10, und besonders bevorzugt von 1,5 bis 5. Die Funktionalität der Epoxidverbindung bezeichnet die Anzahl der Epoxidgruppen pro Molekül. Eine gebrochenzahlige Funktionalität kann durch Mischen von Epoxidverbindungen mit verschiedener Funktionalität erreicht werden.

Die zur Präpolymerisation verwendete Epoxidverbindung ist bevorzugt eine mindestens difunktionelle Epoxidverbindung, vorzugsweise eine aliphatische, cycloaliphatische oder aromatische Epoxidverbindung, sowie Mischungen davon. Beispiele für geeignete Epoxidverbindungen sind aliphatische Diglycidylether und Diglycidylester, insbesondere Butandioldiglycidylether, Hexandioldiglycidylether und Trimethylolpropantriglycidylether, sowie aromatische Diglycidylether wie Bisphenol-A-diglycidylether (DGEBA) oder Bisphenol-F-diglycidylether (DGEBF). Als cycloaliphatische Epoxidverbindung können epoxidiertes Dicyclopentadien und 3,4-Epoxycyclohexylmethyl-3,4-epoxycyclohexancarboxylat verwendet werden.

Als Reaktivverdünner können insbesondere aliphatische und aromatische Monoglycidylether, bevorzugt aliphatische C10-C20-Glycidylether, und/oder epoxidierte Fettsäureester und Pflanzenöle wie epoxidiertes Nußschalenöl eingesetzt werden.

Bei Verwendung unterschiedlicher hydroxyterminierter Polymere können präpolymerisierte Polyester-Blockcopolymere mit Einheiten der folgenden allgemeinen Formel (IV) erhalten werden: 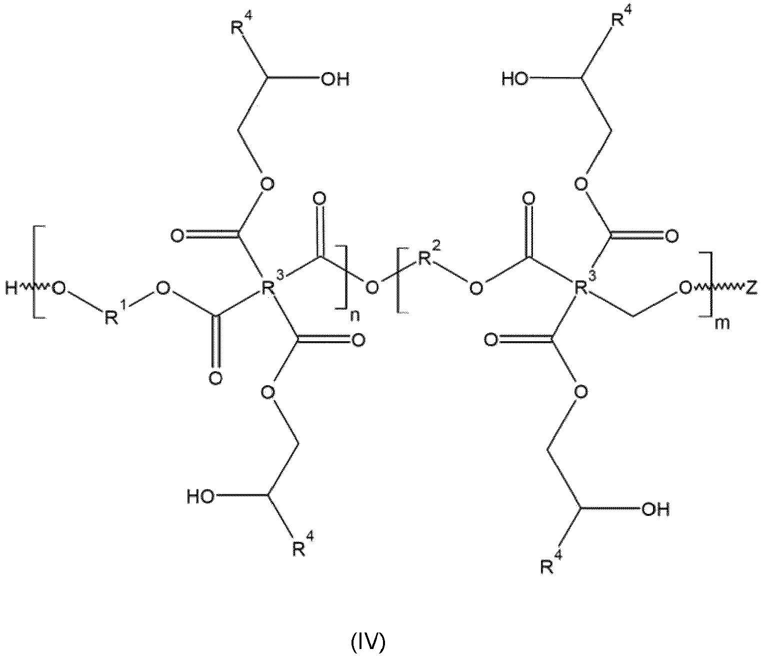 worin
R¹, R², R³ und Z die oben für Formel (II) angegebene Bedeutung besitzen;
R⁴ einen organischen Rest bedeutet, bevorzugt einen von einem aliphatischen Diglycidylether, Bisphenol-A-diglycidylether (DGEBA) oder Bisphenol-F-diglycidylether (DGEBF) durch Entfernen von einer Oxirangruppe abgeleiteten Rest; und
n und m jeweils eine Zahl von 0 bis 6 bedeuten und n+m in einem Bereich von 1 bis 6 liegt.

Bevorzugt weist der Rest R⁴ eine vorzugsweise endständige Epoxygruppe auf.

Das mittlere Molekulargewicht Mₙ (Zahlenmittel) der präpolymerisierten Polyester-Blockcopolymere gemäß Formel (IV) liegt jeweils im Bereich von etwa 2.000 bis 20.000 g/mol, bevorzugt von 5.000 bis 12.000 g/mol. Die Bestimmung des mittleren Molekulargewichts kann mittels GPC erfolgen.

Gegenstand der Erfindung ist ferner die Verwendung der erfindungsgemäßen Polyester und/oder der präpolymerisierten Polyester der zuvor beschriebenen Art als Zähigkeitsmodifikator in Epoxidharzmassen, wahlweise alleine oder zusammen mit einem weiteren Zähigkeitsmodifikator oder Toughener. Die Erfindung ist ferner auf Epoxidharzmassen gerichtet, welche die erfindungsgemäßen Polyester als Zähigkeitsmodifikatoren enthalten.

Im Folgenden werden die erfindungsgemäßen Polyester auch als erster Zähigkeitsmodifikator oder erster Toughener bezeichnet. Die erfindungsgemäßen präpolymerisierten Polyester werden entsprechend auch als erster präpolymerisierter Zähigkeitsmodifikator oder Toughener bezeichnet.

Die Epoxidharzmassen können neben dem ersten Zähigkeitsmodifikator einen oder mehrere weitere Zähigkeitsmodifikatoren oder Toughener enthalten, die im Folgenden auch als "zweiter Zähigkeitsmodifikator" oder als "zweiter Toughener" bezeichnet werden.

Die weiteren Zähigkeitsmodifikatoren sind bevorzugt ausgewählt aus der Gruppe der Polyol-Polyurethanaddukte, insbesondere Phenol-funktionalisierte Polyurethane, der Carboxyl-terminierten Copolymere von Butadien und Acrylnitril (CTBN), der Core-Shell-Kautschuke und/oder Mischungen davon. Die weiteren Zähigkeitsmodifikatoren sind dem Fachmann bekannt und als Handelsprodukte erhältlich.

Auch die weiteren Zähigkeitsmodifikatoren können durch Umsetzung mit Epoxidharzen präpolymerisiert sein. Zur Präpolymerisation eignen sich die oben schon zur Umsetzung mit dem erfindungsgemäßen Polyester beschriebenen Epoxidharze. Dementsprechend werden im Folgenden die weiteren präpolymerisierten Zähigkeitsmodifikatoren auch als zweiter präpolymerisierter Zähigkeitsmodifikator oder Toughener bezeichnet.

Der Gesamtanteil des ersten Zähigkeitsmodifikators und des zweiten Zähigkeitsmodifikators in der Epoxidharzmasse kann 5 bis 25 Gew-% betragen, bevorzugt 10 bis 15 Gew-%, jeweils bezogen auf das Gesamtgewicht von in der Epoxidharzmasse enthaltenem Epoxidharz und Zähigkeitsmodifikator(en). Die Zähigkeitsmodifikator(en) werden bevorzugt als Toughener-Lösung, gelöst in Epoxidharz, eingesetzt.

In einer bevorzugten Ausführungsform enthält die Epoxidharzmasse den ersten Zähigkeitsmodifikator und/oder präpolymerisierten Zähigkeitsmodifikator in einem Anteil von 5 bis 15 Gew-%, und den zweiten Zähigkeitsmodifikator und/oder präpolymerisierten Zähigkeitsmodifikator in einem Anteil von 0 bis 10 Gew-%, bevorzugt 3 bis 10 Gew-%, bezogen auf das Gesamtgewicht von in der Epoxidharzmasse enthaltenem Epoxidharz und Zähigkeitsmodifikator(en).

Das Verhältnis der Gewichtsanteile des ersten, wahlweise präpolymerisierten Zähigkeitsmodifikators und des zweiten, wahlweise präpolymerisierten Zähigkeitsmodifikators kann im Bereich von 4:1 bis 1:4 liegen, bevorzugt im Bereich von 2:1 bis 1:1.

Die Epoxidharzkomponente der Epoxidharzmasse kann aus den oben für die Präpolymerisation der erfindungsgemäßen Polyester angegebenen Epoxidharzen ausgewählt sein. Es können die gleichen Epoxidharze verwendet werden, die auch für die Präpolymerisation der erfindungsgemäßen Polyester eingesetzt wurden, oder auch davon verschiedene Epoxidharze.

Die Epoxidharzmasse kann ferner weitere Komponenten enthalten, wie beispielsweise Härter, bevorzugt Dicyandiamid, Beschleuniger, bevorzugt Harnstoffe und/oder Harnstoffderivate, und Füllstoffe, bevorzugt Calciumcarbonat und/oder Kieselsäure, und/oder Mischungen davon.

Weitere mögliche Additive zur Verwendung in Epoxidharzmassen können Farbstoffe, Pigmente, Alterungsschutzmittel, Fluoreszenzmittel, Stabilisatoren, Haftvermittler, Trockenmittel, Vernetzer, Fließverbesserer, Benetzungsmittel, Thixotropierungsmittel, reaktive oder nicht-reaktive Verdünnungsmittel, polymere Verdickungsmittel, Flammschutzmittel, Korrosionsinhibitoren, Weichmacher und Tackyfier sein.

### BESCHREIBUNG VON BEVORZUGTEN AUSFÜHRUNGSFORMEN

Im Folgenden ist die Herstellung von bevorzugten Ausführungsbeispielen des erfindungsgemäßen Polyesters und präpolymerisierter Derivate davon sowie deren Verwendung in Epoxidharzmassen beschrieben. Die Beispiele dienen nur zur Erläuterung der Erfindung und sollen nicht in einem einschränkenden Sinn verstanden werden.

Zur Herstellung des kettenverlängerten Polyesters und der Epoxidharzmassen werden die folgenden Materialien eingesetzt:

| Substanz | Funktion | Lieferant |
|---|---|---|
| PolyTHF-1000 | Hydroxyterminiertes Polyalkylenglykol; Mₙ=1000 g/mol | BASF |
| PolyTHF-2000 | Hydroxyterminiertes Polyalkylenglykol; Mₙ=2000 g/mol | BASF |
| Capa 2101A | Hydroxyterminierter Polyester; Mₙ=1000 g/mol | Perstorp |
| Krasol LBH-P 2000 | Hydroxyterminiertes Polybutadien; Mₙ=2100 g/mol | Cray Valley |
| Krasol LBH-P 3000 | Hydroxyterminiertes Polybutadien; Mₙ=3200 g/mol | Cray Valley |
| Poly bd R20LM | Hydroxyterminiertes Polybutadien; Mₙ=1350 g/mol | Cray Valley |
| Hypro™ 3000x914 LMW | Hydroxyterminiertes Polybutadien-Acrylnitril-Copolymer; Mₙ=2235 g/mol | Emerald Performance Materials |
| Pyromellitsäuredianhydrid | Dianhydrid | Alfa Aesar |
| 3,3',4,4'-Benzophenontetracarbonsäure-dianhydrid | Dianhydrid | Alfa Aesar |
| D.E.R. 331 | DGEBA; Epoxidharz | Olin |
| Triphenylphosphin | Katalysator | Fluka AG |
| Dyhard 100SF | Dicyandiamid; Härter | Alzchem GmbH |
| Dyhard UR500 | Harnstoffderivat; Beschleuniger | Alzchem GmbH |
| Calprec PR-2E | CaCO₃; Füllstoff | Cales de Llierca |
| Aerosil R202 | Kieselsäure; Füllstoff | Evonik Industries |
| DY 965 | Phenolfunktionalisiertes Polyurethan; zweiter Toughener | Huntsman Corporation |

Als Vergleichsbeispiel und weiterer (zweiter) Toughener wurde das Produkt Struktol® Polydis® 3614 der Fa. Schill+Seilacher "Struktol" GmbH eingesetzt. Es handelt sich um ein Carboxyl-terminiertes Copolymer aus Butadien und Acrylnitril (CTBN), das durch die Präpolymerisation mit DGEBA im Überschuss in das entsprechende Epoxid-terminierte Addukt umgesetzt wird. Struktol® Polydis® 3614 enthält präpolymerisiertes CTBN in einem Anteil von 40 Gew-%, gelöst in Epoxidharz.

Die präpolymerisierten kettenverlängerten Polyester und CTBN wurden an Epoxidharzmassen mit DGEBA und Dicyandiamid/Harnstoff als Härter/Beschleuniger getestet. An den gehärteten Proben wurden die Zugscherfestigkeit nach DIN EN 1465 und Bruchzähigkeit (K_{1C}) nach ASTM D5045 sowie die Glasübergangstemperatur (T_{G}) mittels dynamischer Differenzkalorimetrie (DSC) bestimmt.

### Herstellung der kettenverlängerten Polyester und Präpolymerisation

### Beispiel 1 (nicht erfindungsgemäß)

In einem 500 mL Reaktionsgefäß mit Rührer und Thermometer werden 750 g PolyTHF-1000 vorgelegt und unter Stickstoffatmosphäre auf 140 °C erwärmt. 109,2 g Pyromellitsäuredianhydrid werden nach Erreichen der Temperatur über einen Feststofftrichter unter Rühren zugegeben, und die Mischung wird etwa 2 h lang auf der Temperatur gehalten. Es wird eine transparente, farblose, viskose Flüssigkeit erhalten (Säurezahl SZ=66,2 mg/g, Viskosität η_{25°C}=107 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei -1730 cm⁻¹ beobachtet werden. Zusätzlich konnte ein Molekulargewichtsanstieg mittels GPC bestimmt werden.

70 g des Reaktionsproduktes werden mit 280 g DGEBA unter Zugabe von 0,06 g Triphenylphosphin bei 120 °C für 1,5 h präpolymerisiert. Es wird ein transparentes, leicht gelbliches Präpolymer (SZ=0 mg/g, η_{25°C}=66,2 Pas) erhalten.

### Beispiel 2 (nicht erfindunasaemäß)

In einem 500 mL Reaktionsgefäß mit Rührer und Thermometer werden 200 g PolyTHF-2000 vorgelegt und unter Stickstoffatmosphäre auf 140 °C erwärmt. 14,6 g Pyromellitsäuredianhydrid werden nach Erreichen der Temperatur über einen Feststofftrichter unter Rühren zugegeben, und die Mischung wird etwa 2 h lang auf der Temperatur gehalten. Es wird eine transparente, farblose, viskose Flüssigkeit erhalten (SZ=38,1 mg/g, η_{25°C} = 260 Pas). Mittels IR-Spektroskopie konnte der vollständige Verlust der charakteristischen Bande bei -1850 cm⁻¹ der Anhydrid-Funktion sowie ein starker Anstieg der Ester-Bande bei -1730 cm⁻¹ beobachtet werden. Zusätzlich konnte ein Molekulargewichtsanstieg mittels GPC bestimmt werden.

40 g des Reaktionsproduktes werden mit 160 g DGEBA unter Zugabe von 0,06 g Triphenylphosphin bei 120 °C für 1,5 h präpolymerisiert. Es wird ein transparentes, leicht gelbliches Präpolymer (SZ=0 mg/g, η_{25°C}=44,7 Pas) erhalten.

### Herstellung der amphiphilen Polyester-Blockcopolymere und Präpolymerisation:

### Beispiel 3

In einem 500 mL Reaktionsgefäß mit Rührer und Thermometer werden 50 g Krasol LBH-P 2000 (Mₙ = 2.100 g/mol) und 200 g PolyTHF-1000 vorgelegt und unter Stickstoffatmosphäre auf 140 °C erwärmt. 24,5 g Pyromellitsäuredianhydrid werden nach Erreichen der Temperatur über einen Feststofftrichter unter Rühren zugegeben, und die Mischung wird etwa 2 h lang auf der Temperatur gehalten. Es wird eine transparente, farblose, viskose Flüssigkeit erhalten (SZ=48,3 mg/g, η_{25°C}=35,0 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei ∼1730 cm⁻¹ beobachtet werden. Zusätzlich konnte ein Molekulargewichtsanstieg mittels GPC bestimmt werden.

40 g des Reaktionsproduktes werden mit 160 g DGEBA unter Zugabe von 0,06 g Triphenylphosphin bei 120 °C für 1,5 h präpolymerisiert. Es wird ein gelbliches leicht trübes Präpolymer (SZ=0 mg/g, η_{25°C}=27,3 Pas) erhalten.

### Beispiel 4

In einem 500 mL Reaktionsgefäß mit Rührer und Thermometer werden 80 g Krasol LBH-P 2000 und 160 g PolyTHF-1000 vorgelegt und unter Stickstoffatmosphäre auf 140 °C erwärmt. 36,8 g 3,3',4,4'-Benzophenontetracarbonsäuredianhydrid werden nach Erreichen der Temperatur über einen Feststofftrichter unter Rühren zugegeben, und die Mischung wird etwa 2 h lang auf der Temperatur gehalten. Es wird eine leicht trübe, orange-bräunliche, viskose Flüssigkeit erhalten (SZ=46,8 mg/g, η_{25°C}=175 Pas). Mittels IR-Spektroskopie konnte der vollständige Verlust der charakteristischen Bande bei -1850 cm⁻¹ der Anhydrid-Funktion sowie ein starker Anstieg der Ester-Bande bei -1730 cm⁻¹ beobachtet werden. Zusätzlich konnte ein Molekulargewichtsanstieg mittels GPC bestimmt werden.

40 g des Reaktionsproduktes werden mit 160 g DGEBA unter Zugabe von 0,06 g Triphenylphosphin bei 120 °C für 1,5 h präpolymerisiert. Es wird ein gelbliches leicht trübes Präpolymer (SZ=0 mg/g, η_{25°C}=27,3 Pas) erhalten.

### Beispiel 5

In einem 500 mL Reaktionsgefäß mit Rührer und Thermometer werden 100 g Krasol LBH-P 2000 und 200 g PolyTHF-1000 vorgelegt und unter Stickstoffatmosphäre auf 140 °C erwärmt. 36,3 g Pyromellitsäuredianhydrid werden unter Rühren nach Erreichen der Temperatur über einen Feststofftrichter zugegeben, und die Mischung wird etwa 2 h lang auf der Temperatur gehalten. Es wird eine transparente, farblose, viskose Flüssigkeit erhalten (SZ=56,9 mg/g, η_{25°C}=682 Pas). Mittels IR-Spektroskopie konnte der vollständige Verlust der charakteristischen Bande bei -1850 cm⁻¹ der Anhydrid-Funktion sowie ein starker Anstieg der Ester-Bande bei -1730 cm⁻¹ beobachtet werden. Zusätzlich konnte ein Molekulargewichtsanstieg mittels GPC bestimmt werden.

40 g des Reaktionsproduktes werden mit 160 g DGEBA und Zugabe von 0,06 g Triphenylphosphin bei 120 °C für 1,5 h präpolymerisiert. Es wird ein gelbliches transparentes Präpolymer (SZ=0 mg/g, η_{25°C}=225,2 Pas) erhalten.

### Beispiel 6

In einem 500 mL Reaktionsgefäß mit Rührer und Thermometer werden 83 g Krasol LBH-P 3000 und 166 g PolyTHF-1000 vorgelegt und unter Stickstoffatmosphäre auf 140 °C erwärmt. 28,2 g Pyromellitsäuredianhydrid werden unter Rühren nach Erreichen der Temperatur über einen Feststofftrichter zugegeben, und die Mischung wird etwa 2 h lang auf der Temperatur gehalten. Es wird eine transparente, farblose, viskose Flüssigkeit erhalten (SZ=52,1 mg/g, η_{25°C}=433,0 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei ∼1730 cm⁻¹ beobachtet werden. Zusätzlich konnte ein Molekulargewichtsanstieg mittels GPC bestimmt werden.

40 g des Reaktionsproduktes werden mit 160 g DGEBA und Zugabe von 0,06 g Triphenylphosphin bei 120 °C für 1,5 h präpolymerisiert. Es wird ein gelbliches trübes Präpolymer (SZ=0 mg/g, η_{25°C}=156,0 Pas) erhalten.

### Beispiel 7

In einem 500 mL Reaktionsgefäß mit Rührer und Thermometer (Pt-1000) werden 70 g Poly bd R20LM (Mₙ = 1350 g/mol) und 140 g PolyTHF-2000 vorgelegt und unter Stickstoffatmosphäre auf 140 °C erwärmt. 18,0 g Pyromellitsäuredianhydrid werden unter Rühren nach Erreichen der Temperatur über einen Feststofftrichter zugegeben, und die Mischung wird etwa 2,5 h lang auf der Temperatur gehalten. Es wird eine leicht trübe viskose Flüssigkeit erhalten (SZ=41,7 mg/g, η_{25°C}=3100 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei ∼1730 cm⁻¹ beobachtet werden. Zusätzlich konnte ein Molekulargewichtsanstieg mittels GPC bestimmt werden.

40 g des Reaktionsproduktes werden mit 160 g DGEBA unter Zugabe von 0,06 g Triphenylphosphin bei 120 °C für 1,5 h präpolymerisiert. Es wird ein gelbliches trübes Präpolymer (SZ=0 mg/g, η_{25°C}=187,3 Pas) erhalten.

### Beispiel 8

In einem 500 mL Reaktionsgefäß mit Rührer und Thermometer werden 30,0 g Hypro™ 3000x914 LMW und 120 g Capa 2101A vorgelegt und unter Stickstoffatmosphäre auf 130 °C erwärmt. 16,9 g Pyromellitsäuredianhydrid werden unter Rühren nach Erreichen der Temperatur über einen Feststofftrichter zugegeben, und die Mischung wird etwa 2,5 h lang auf der Temperatur gehalten. Es wird eine bräunlich transparente, viskose Flüssigkeit erhalten (SZ=53,4 mg/g, η_{25°C}=380 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei ∼1730 cm⁻¹ beobachtet werden. Zusätzlich konnte ein Molekulargewichtsanstieg mittels GPC bestimmt werden.

30 g des Reaktionsproduktes werden mit 120 g DGEBA und Zugabe von 0,045 g Triphenylphosphin bei 120 °C für 1,5 h präpolymerisiert. Es wird ein gelbliches trübes Präpolymer (SZ=0 mg/g, η_{25°C}=83,5 Pas) erhalten.

### Beispiel 9

In einem 500 mL Reaktionsgefäß mit Rührer und Thermometer werden 30,0 g Hypro™ 3000x914 LMW und 120 g PolyTHF-1000 vorgelegt und unter Stickstoffatmosphäre auf 130 °C erwärmt. 16,9 g Pyromellitsäuredianhydrid werden unter Rühren nach Erreichen der Temperatur über einen Feststofftrichter zugegeben, und die Mischung wird etwa 2,5 h lang auf der Temperatur gehalten. Es wird eine bräunlich transparente, viskose Flüssigkeit erhalten (SZ=53,2 mg/g, η_{25°C}=105 Pas). Mittels IR-Spektroskopie konnte der vollständige Verlust der charakteristischen Bande bei -1850 cm⁻¹ der Anhydrid-Funktion sowie ein starker Anstieg der Ester-Bande bei -1730 cm⁻¹ beobachtet werden. Zusätzlich konnte ein Molekulargewichtsanstieg mittels GPC bestimmt werden.

30 g des Reaktionsproduktes werden mit 120 g DGEBA und Zugabe von 0,045 g Triphenylphosphin bei 120 °C für 1,5 h präpolymerisiert. Es wird ein gelbliches trübes Präpolymer (SZ=0 mg/g, η_{25°C}=43,5 Pas) erhalten.

### Beispiel 10

In einem 500 mL Reaktionsgefäß mit Rührer und Thermometer werden 50,0 g Krasol LBH-P 2000 und 200 g PolyTHF-1000 vorgelegt und unter Stickstoffatmosphäre auf 130 °C erwärmt. 32,7 g Pyromellitsäuredianhydrid werden unter Rühren nach Erreichen der Temperatur über einen Feststofftrichter zugegeben, und die Mischung wird etwa 2,5 h lang auf der Temperatur gehalten. Es wird eine bräunlich transparente, viskose Flüssigkeit erhalten (SZ=60,1 mg/g, η_{25°C} =105 Pas). Mittels IR-Spektroskopie konnte der vollständige Verlust der charakteristischen Bande bei ∼1850 cm⁻¹ der Anhydrid-Funktion sowie ein starker Anstieg der Ester-Bande bei ∼1730 cm⁻¹ beobachtet werden. Zusätzlich konnte ein Molekulargewichtsanstieg mittels GPC bestimmt werden.

30 g des Reaktionsproduktes werden mit 120 g DGEBA und Zugabe von 0,045 g Triphenylphosphin bei 120 °C für 1,5 h präpolymerisiert. Es wird ein gelbliches transparentes Präpolymer (SZ=0 mg/g, η_{25°C}= 140,5 Pas) erhalten.

### Herstellung der Epoxidharzmassen

Nach der folgenden Vorschrift wurden Epoxidharzmassen mit der in den Tabellen 1 bis 3 angegebenen Zusammensetzung hergestellt. Als Zähigkeitsmodifikator oder Toughener wurden die präpolymerisierten kettenverlängerten Polyester der Beispiele 1 bis 10 verwendet.

Für die in den Tabellen 1 und 2 angegebenen Zusammensetzungen wird ein Gesamtanteil von 10 Gew-% an erstem präpolymerisiertem Toughener gemäß den Beispielen 1 bis 9 eingesetzt, bezogen auf das Gesamtgewicht von Epoxidharz und Toughener. Der erste präpolymerisierte Toughener ist in einem Anteil von 20 Gew-% in der verwendeten Toughener-Lösung enthalten, die den ersten präpolymerisierten Toughener gelöst in Epoxidharz enthält. Die Angabe in den Tabellen bezieht sich jeweils auf das Gewicht der Toughener-Lösung. Alternativ können auch die kettenverlängerten Polyester, ohne vorherige Präpolymerisation mit Epoxidharz, verwendet werden.

Die in Tabelle 3 angegebenen Zusammensetzungen weisen einen Gesamtanteil von 15 Gew-% an erstem präpolymerisiertem Toughener gemäß Beispiel 10 und zweitem, wahlweise präpolymerisiertem Toughener auf, jeweils bezogen auf das Gesamtgewicht von Epoxidharz, Toughener-Lösung und zweitem Toughener. Der erste präpolymerisierte Toughener ist auch in diesen Beispielen in einem Anteil von 20 Gew-% in der Toughener-Lösung enthalten, bezogen auf das Gesamtgewicht der Toughener-Lösung. Struktol® Polydis® 3614 ist ein präpolymerisiertes CTBN, welches in einem Anteil von 40 Gew-% in einer Epoxidharz-Lösung vorliegt. DY 965 ist ein Zähigkeitsmodifikator auf Basis eines Polyol-Polyurethan-Addukts mit endständigen Phenolgruppen. In einem PE-Becher mit Schraubdeckel wurden alle Komponenten eingewogen, und anschließend 2 min lang bei 2500 U/min im Speedmixer homogenisiert. Bei hoher Viskosität werden die Abmischungen bei 60 °C vorgewärmt und bei Bedarf mehrfach im Speedmixer homogenisiert. Für die Zugscherprüfung werden zusätzlich anorganische Füllstoffe (10 phr CaCO₃, 5 phr Kieselsäure und 1 phr Glaskugeln d=0,1-0,2 mm) zugemischt. Die Abmischungen für die K_{1C}-Prüfung werden vor der Aushärtung zusätzlich bei 80 °C entgast. Von den Platten der K_{1C}-Prüfung wurden zusätzlich die Glasübergangstemperatur (T_{G}) bestimmt.

Das Vergleichsprodukt Struktol® Polydis® 3614 in Tabelle 1 und 2 wurde mit DGEBA auf 10 Gew.-% Elastomeranteil verdünnt und genau wie die erfindungsgemäßen Polyester vorbereitet und ausgehärtet.

Die so erhaltenen Epoxidharzmassen wurden den im Folgenden angegebenen Prüfungen unterzogen. Die erhaltenen Testergebnisse sind ebenfalls in den Tabellen 1 bis 3 angegeben.

### Zugscherfestigkeit nach DIN EN 1465:

Die Prüfkörper wurden aus den entsprechenden Formulierungen und Stahlplatten DC-04 mit den Ausmaßen 100 x 25 x 3 mm (Klebfläche: 25 x 10 mm, Klebstoffdicke: 0,2 mm) hergestellt und 45 min lang bei 180 °C ausgehärtet. Die Prüfgeschwindigkeit betrug 5 mm/min.

### Bruchzähigkeit nach ASTM D5045:

Die Epoxidharzmassen werden zu Platten vergossen und ausgehärtet. Aus den so hergestellten Platten werden Probenkörper (4,3 x 4,3 cm) gefräst, die mit Hilfe eines Fallturms angerissen werden. Die Probe wird durch eine Zwick Material-Prüfmaschine bis zum Bruch belastet und aus der Kraft-Verformungskurve und der Risslänge die Bruchzähigkeit bestimmt.

**Tabelle 1: Epoxidharzmassen mit präpolymerisiertem kettenverlängerten Polyester als Zähigkeitsmodifikator (Toughener)**

| | **Beispiel 1 (nicht erfindungsgemäß)** | **Beispiel 2 (nicht erfindungsgemäß)** | **Vergleich Struktol® Polydis® 3614** |
|---|---|---|---|
| D.E.R. 331 [g] | 45 | 45 | 67,5 |
| Toughener-Lösung [g] | 45 | 45 | 22,5 |
| Dyhard 100SF [g] | 5,4 | 5,4 | 5,4 |
| Dyhard UR500 [g] | 1,8 | 1,8 | 1,8 |
| Zugscherfestigkeit [MPa] | 30,5 | 30,5 | 31,0 |
| K1C [MPa√m] | 1,54 | 1,27 | 1,43 |
| TG[°C] | 124 | 138 | 129 |

**Tabelle 2: Epoxidharzmassen mit präpolymerisierten amphiphilen Polyester-Blockcopolymeren als Zähigkeitsmodifikatoren (Toughener)**

| | Kontrolle | Bsp. 3 | Bsp. 4 | Bsp. 5 | Bsp. 6 | Bsp. 7 | Bsp. 8 | Bsp. 9 |
|---|---|---|---|---|---|---|---|---|
| D.E.R. 331 [g] | 90 | 45 | 45 | 22,5 | 45 | 45 | 45 | 45 |
| Toughener-Lösung [g] | | 45 | 45 | 67,5 | 45 | 45 | 45 | 45 |
| Dyhard 100SF [g] | 5,4 | 5,4 | 5,4 | 5,4 | 5,4 | 5,4 | 5,4 | 5,4 |
| Dyhard UR500 [g] | 1,8 | 1,8 | 1,8 | 1,8 | 1,8 | 1,8 | 1,8 | 1,8 |
| Zugscherfestigkeit [MPa] | 24,3 | 36,6 | 38,5 | 33,4 | 38,0 | 35,0 | 29,0 | 32,5 |
| K_{1C} [MPa√m] | 0,83 | 1,59 | 1,27 | 1,40 | 1,16 | 1,35 | 1,1 | 1,4 |
| T_{G}[°C] | 147 | 121 | 125 | 128 | 133 | 130 | 112 | 126 |

**Tabelle 3: Epoxidharzmassen mit präpolymerisierten amphiphilen Polyester-Blockcopoplymeren als Zähigkeitsmodifikator (Toughener)**

| | **Formulierung 1** | **Formulierung 2** | **Vergleich DY 965** | **Vergleich Struktol® Polydis® 3614** |
|---|---|---|---|---|
| D.E.R. 331 [g] | 40,5 | 33,75 | 76,5 | 56,25 |
| Toughener-Lösung (Beispiel 10) [g] | 45 | 45 | | |
| DY 965 [g] | 4,5 | | 13,5 | |
| Struktol® Polydis® 3614 [g] | | 11,25 | | 33,75 |
| Dyhard 100SF [g] | 5,4 | 5,4 | 5,4 | 5,4 |
| Dyhard UR500 [g] | 1,8 | 1,8 | 1,8 | 1,8 |
| Zugscherfestigkeit [MPa] | 36,5 | 32,9 | 32,3 | 29,9 |
| K_{1C}[MPa√m] | 1,87 | 1,84 | 1,72 | 1,71 |
| T_{G}[°C] | 126 | 126 | 127 | 126 |

Die Testergebnisse zeigen, dass die unter Verwendung der kettenverlängerten Polyester nach Präpolymerisation hergestellten Epoxidharzmassen ein sehr gutes Eigenschaftsprofil hinsichtlich der Zugscherfestigkeit und den K_{1C}-Werten aufweisen. Im Vergleich zu Epoxidharzmassen, die unter Verwendung des Reaktivkautschuks CTBN modifiziert wurden, ist teilweise sogar eine Verbesserung der Zugscherfestigkeit und/oder der K_{1C}-Werte festzustellen, während der Glasübergangspunkt T_{G} im Wesentlichen erhalten bleibt.

Durch Auswahl der jeweiligen Segmente und der Molekulargewichte der hydroxyterminierten Polymere und/oder der präpolymerisierten Blockcopolyester kann das Eigenschaftsprofil der Polyester-Blockcopolymere auf eine gewünschte Anwendung zugeschnitten werden. Darüber hinaus sind über die unterschiedliche Größe und/oder die unterschiedliche Kompatibilität der Segmente mit der Epoxidharzmatrix auch bimodale Partikelgrößenverteilungen in den ausgehärteten Epoxidharzmassen einstellbar. Die Selbstorganisation der amphiphilen Blockcopolymere zu nano- oder mikrostrukturierten Domänen mit unterschiedlichem Teilchendurchmesser ermöglicht eine weitere Beeinflussung der Zähigkeitseigenschaften von Epoxidharzen.

Aus Tabelle 3 geht die vorteilhafte Anwendung eines zweiten, wahlweise präpolymerisierten Tougheners zusammen mit dem ersten präpolymerisierten Toughener hervor. So zeigt die Formulierung 1 den Einsatz eines Polyol-Polyurethan-Addukts als zweiten Toughener, wobei sich positive synergistische Effekte zwischen dem ersten Toughener und dem zweiten Toughener ergeben. Im Vergleich zur Verwendung des Tougheners DY 965 alleine sind sowohl die Zugscherfestigkeit als auch die Bruchzähigkeit (K_{1C}-Wert) erhöht.

Die Formulierung 2 verdeutlicht den Effekt des Einsatzes von Struktol® Polydis® 3614 als zweiten Toughener, zusammen mit den erfindungsgemäßen polymerisierten Polyestern. Im Vergleich zur Verwendung von Struktol® Polydis® 3614 als alleinigem Zähigkeitsmodifikator ist eine deutliche Verbesserung sowohl der Zugscherfestigkeit als auch der Bruchzähigkeit festzustellen.

Auch bei den in Tabelle 3 angegebenen Formulierungen bleiben die Glasübergangstemperaturen T_{G} nahezu unverändert.

## Patentansprüche

1. Polyester, erhältlich durch Umsetzen eines mindestens difunktionellen Polymers, das endständige Hydroxygruppen aufweist, mit einem Dianhydrid, wobei die Anhydridgruppen im Unterschuss zu den Hydroxygruppen vorliegen, wobei der Polyester wenigstens ein erstes Segment mit freien Carbonsäuregruppen aufweist, wobei sich das erste Segment jeweils zwischen zwei weiteren Segmenten befindet, die von dem Polymer mit endständigen Hydroxygruppen abgeleitet sind, und wobei das Umsetzen unter Verwendung von zwei oder mehr verschiedenen hydroxyterminierten Polymeren erfolgt.

2. Polyester nach Anspruch 1, **dadurch gekennzeichnet, dass** die zwei oder mehr verschiedenen mindestens difunktionellen hydroxyterminierten Polymere endständige primäre OH-Gruppen aufweisen.

3. Polyester nach einem der vorhergehenden Ansprüche, **dadurch gekennzeichnet, dass** der Polyester eines oder mehrere der folgenden Merkmale aufweist:
- die zwei oder mehr mindestens difunktionellen hydroxyterminierten Polymere weisen eine Funktionalität von zwei bis drei auf;
- die zwei oder mehr mindestens difunktionellen hydroxyterminierten Polymere sind aus der aus hydroxyterminierten Polyalkylenglykolen, Polyestern, Polybutadienen, Copolymeren von Polybutadien und Acrylnitril sowie Mischungen davon bestehenden Gruppe ausgewählt;
- das Dianhydrid ist aus der aus Pyromellitsäuredianhydrid, 3,3',4,4'-Biphenyl-tetracarboxyldianhydrid und 3,3',4,4'-Benzophenontetracarbonsäuredianhydrid sowie Kombinationen davon bestehenden Gruppe ausgewählt; und/oder
- das molare Verhältnis der Anhydridgruppen zu Hydroxygruppen liegt in einem Bereich von 0,5:1 bis 0,85:1.

4. Präpolymerisierter Polyester, erhältlich durch Umsetzen der freien Carbonsäuregruppen eines Polyesters gemäß einem der vorhergehenden Ansprüche mit wenigstens einer Epoxidverbindung, wobei die Epoxidverbindung eine Funktionalität von größer als 1 aufweist.

5. Verwendung eines Polyesters nach einem der Ansprüche 1 bis 3 und/oder eines präpolymerisierten Polyesters nach Anspruch 4 als Zähigkeitsmodifikator in Epoxidharzmassen.

6. Epoxidharzmasse, enthaltend einen ersten Zähigkeitsmodifikator und wahlweise einen zweiten Zähigkeitsmodifikator, wobei der erste Zähigkeitsmodifikator ein Polyester nach einem der Ansprüche 1 bis 3 und/oder ein präpolymerisierter Polyester nach Anspruch 4 ist, und wobei der zweite Zähigkeitsmodifikator bevorzugt aus der aus Polyol-Polyurethan-Addukten, Carboxyl-terminierten Copolymeren von Butadien und Acrylnitril (CTBN), Core-Shell-Kautschuken und Mischungen davon bestehenden Gruppe ausgewählt ist.

7. Epoxidharzmasse nach Anspruch 6, **dadurch gekennzeichnet, dass** der Gesamtanteil des ersten Zähigkeitsmodifikators und des zweiten Zähigkeitsmodifikators in der Epoxidharzmasse von 5 bis 25 Gew-% beträgt, bevorzugt 10 bis 15 Gew-%, bezogen auf das Gesamtgewicht von in der Epoxidharzmasse enthaltenem Epoxidharz und Zähigkeitsmodifikator(en),
und
wobei der erste Zähigkeitsmodifikator bevorzugt in einem Anteil von 5 bis 15 Gew.-% vorliegt, und weiter bevorzugt wobei der zweite Zähigkeitsmodifikator in einem Anteil von 0 bis 10 Gew.-% vorliegt, insbesondere 3 bis 10 Gew-%.

8. Epoxidharzmasse nach Anspruch 6 oder 7, **dadurch gekennzeichnet, dass** das Verhältnis der Gewichtsanteile des ersten Zähigkeitsmodifikators und des zweiten Zähigkeitsmodifikators im Bereich 4:1 bis 1:4 liegt, bevorzugt im Bereich 2:1 bis 1:1.

## Claims

1. A polyester obtainable by reacting an at least difunctional polymer having terminal hydroxyl groups with a dianhydride, the anhydride groups being present substoichiometrically in relation to the hydroxyl groups, the polyester including at least one first segment having free carboxylic acid groups, each first segment being located between two further segments that are derived from the polymer having terminal hydroxyl groups, and the reaction being effected using two or more different hydroxyl-terminated polymers.

2. The polyester according to claim 1, **characterized in that** the two or more different at least difunctional hydroxyl-terminated polymers include terminal primary OH groups.

3. The polyester according to either of the preceding claims, **characterized in that** the polyester has one or more of the following features:
- the two or more at least difunctional hydroxyl-terminated polymers have a functionality of from two to three;
- the two or more at least difunctional hydroxyl-terminated polymers are selected from the group consisting of hydroxyl-terminated polyalkylene glycols, polyesters, polybutadienes, copolymers of polybutadiene and acrylonitrile and mixtures thereof;
- the dianhydride is selected from the group consisting of pyromellitic acid dianhydride, 3,3',4,4'-biphenyltetracarboxylic dianhydride and 3,3',4,4'-benzophenone tetracarboxylic acid dianhydride, and combinations thereof; and/or
- the molar ratio of the anhydride groups to hydroxyl groups is in a range of from 0.5:1 to 0.85:1.

4. A prepolymerized polyester obtainable by reacting the free carboxylic acid groups of a polyester according to any of the preceding claims with at least one epoxy compound, wherein the epoxy compound has a functionality of greater than 1.

5. Use of a polyester according to any of claims 1 to 3 and/or a prepolymerized polyester according to claim 4 as a toughener in epoxy resin compositions.

6. An epoxy resin composition containing a first toughener and optionally a second toughener, wherein the first toughener is a polyester according to any of claims 1 to 3 and/or a prepolymerized polyester according to claim 4, and wherein the second toughener is preferably selected from the group consisting of polyol-polyurethane adducts, carboxyl-terminated copolymers of butadiene and acrylonitrile (CTBN), core-shell rubbers and mixtures thereof.

7. The epoxy resin composition according to claim 6, **characterized in that** the total content of the first toughener and the second toughener in the epoxy resin composition is from 5 to 25% by weight, preferably from 10 to 15% by weight, based on the total weight of epoxy resin and toughener(s) contained in the epoxy resin composition,
and
wherein the first toughener is preferably present in a proportion of from 5 to 15% by weight, and further preferably wherein the second toughener is present in a proportion of from 0 to 10% by weight, in particular from 3 to 10% by weight.

8. The epoxy resin composition according to claim 6 or 7, **characterized in that** the ratio of the weight proportions of the first toughener and the second toughener is in the range of 4:1 to 1:4, preferably in the range of 2:1 to 1:1.

## Revendications

1. Polyester, apte à être obtenu par réaction d'un polymère au moins bifonctionnel qui présente des groupes hydroxyles en fin de chaîne, comprenant un dianhydride, les groupes anhydrides étant présents en une quantité inférieure par rapport aux groupes hydroxyles, le polyester comprenant au moins un premier segment qui présente des groupes d'acide carboxylique libres, le premier segment se trouvant respectivement entre deux autres segments qui sont dérivés du polymère qui présente des groupes hydroxyles en fin de chaîne, et la réaction étant réalisée en utilisant deux polymères à terminaison hydroxyle différents ou plus.

2. Polyester selon la revendication 1, **caractérisé en ce que** les deux polymères à terminaison hydroxyle au moins bifonctionnels différents ou plus présentent des groupes OH primaires en fin de chaîne.

3. Polyester selon l'une des revendications précédentes, **caractérisé en ce que** le polyester présente une ou plusieurs des caractéristiques suivantes :
- les deux polymères à terminaison hydroxyle au moins bifonctionnels ou plus présentent une fonctionnalité de deux à trois ;
- les deux polymères à terminaison hydroxyle au moins bifonctionnels ou plus sont choisis dans le groupe constitué par les polyalkylène glycols à terminaison hydroxyle, les polyesters, les polybutadiènes, les copolymères de polybutadiène et d'acrylonitrile, et leurs mélanges ;
- le dianhydride est choisi dans le groupe constitué par le dianhydride d'acide pyromellitique, le dianhydride 3,3',4,4'-biphényl tétracarboxylique et le dianhydride d'acide 3,3',4,4'-benzophénone tétracarbonique, et leurs combinaisons ; et/ou
- le rapport molaire des groupes anhydrides aux groupes hydroxyles est compris dans une plage entre 0,5:1 et 0,85:1.

4. Polyester prépolymérisé apte à être obtenu par réaction des groupes d'acide carboxylique libres d'un polyester selon l'une des revendications précédentes avec au moins un composé époxy, le composé époxy présentant une fonctionnalité supérieure à 1.

5. Utilisation d'un polyester selon l'une des revendications 1 à 3 et/ou d'un polyester prépolymérisé selon la revendication 4 comme modificateur de ténacité dans des compositions de résine époxy.

6. Composition de résine époxy, comprenant un premier modificateur de ténacité et facultativement un deuxième modificateur de ténacité, le premier modificateur de ténacité étant un polyester selon l'une des revendications 1 à 3 et/ou un polyester prépolymérisé selon la revendication 4, et le deuxième modificateur de ténacité étant de préférence choisi dans le groupe constitué par les produits d'addition polyol-polyuréthane, les copolymères à terminaison carboxyle de butadiène et d'acrylonitrile (CTBN), les caoutchoucs core-shell et leurs mélanges.

7. Composition de résine époxy selon la revendication 6, **caractérisée en ce que** la proportion totale du premier modificateur de ténacité et du deuxième modificateur de ténacité dans la composition de résine époxy est de 5 à 25% en poids, de préférence de 10 à 15% en poids, par rapport au poids total de la résine époxy et du ou des modificateurs de ténacité contenus dans la composition de résine époxy,
et
le premier modificateur de ténacité étant de préférence présent dans une proportion de 5 à 15% en poids, et le deuxième modificateur de ténacité étant de de manière plus préférée présent dans une proportion de 0 à 10% en poids, en particulier de 3 à 10% en poids.

8. Composition de résine époxy selon la revendication 6 ou 7, **caractérisée en ce que** le rapport des proportions en poids du premier modificateur de ténacité et du deuxième modificateur de ténacité est dans la plage de 4:1 à 1:4, de préférence dans la plage de 2:1 à 1:1.
